# EUROPÄISCHE PATENTANMELDUNG

(11) **EP 3 095 322 A1**
(43) Veröffentlichungstag der Anmeldung: **23.11.2016**
(21) Anmeldenummer: 16000957.7
(22) Anmeldetag: 28.04.2016
(51) Int. Cl.: A01K 1/03

(54) **TIERMÖBEL FÜR DEN AUFENTHALT VON TIEREN**

(30) Priorität: 22.05.2015 DE 202015102635 U
(71) Anmelder: Gansbühler, Anja, 97246 Eibelstadt (DE)
(72) Erfinder: Gansbühler, Anja, 97246 Eibelstadt (DE)
(74) Vertreter: Petri, Lars

(57) **Zusammenfassung**

Tiermöbel 1 für den Aufenthalt von Tieren, mit einer Wandung 2, die einen Innenraum 3 zur Aufnahme eines Tieres umschließt, wobei in der Wandung 2 eine Öffnung 4 ausgebildet ist, durch die das Tier in den Innenraum 3 gelangt, wobei die Wandung 2 ein metallisches Material umfasst, um von außen auf das Tiermöbel 1 auftreffende elektromagnetische Strahlung abzuschirmen.

## Beschreibung

Die Erfindung betrifft ein Tiermöbel für den Aufenthalt von Tieren. Der Begriff "Tiere" umfasst insbesondere alle Arten von Haustieren, denen eine Unterschlupfmöglichkeit zum Rückzug im häuslichen Wohnbereich des Menschen angeboten wird.

Das Tiermöbel kann dafür im Innenraum von Wohnhäusern im privaten Bereich oder an einem Büroarbeitsplatz aufgestellt werden. Der Begriff "Tiermöbel" umfasst dabei sowohl die konventionellen Hundehütten als auch Boxen und -röhren, die dahingehend ausgestaltet sind, dass sich Tiere darin zurückziehen können.

Die körperliche Ausgestaltung konventioneller Tiermöbel umfasst eine Wandung, die einen Innenraum bis auf eine Öffnung für den Zutritt vollständig umschließt. Das Tier kann durch die Öffnung in den Innenraum gelangen und sich dorthin zurückziehen. Die Größe des Innenraums wird je nach Tier unterschiedlich gewählt. So wird die Öffnung für einen Pudel kleiner gewählt als die Öffnung für einen Labrador.

Im Stand der Technik offenbart das Dokument DE 75 05 435 ein Tiermöbel als Kleintierbehausung, welches Tiermöbel eine einen hohlen Innenraum umschließende Wandung umfasst. Diese Wandung weist eine Öffnung zum Hineinschlüpfen eines Hundes auf. Für das Material der Wandung werden isolierende Schaumkunststoffe werden vorgeschlagen.

Ferner sind aus dem Stand der Technik mit der US 2009/ 0 031 964 A1, der US 2013/ 0 047 925 A1 und der US 2013/ 0 180 463 A1 Tiermöbel für Hunde bekannt, die als starrer Aufbau, nach oben geöffnet oder als flexibler Aufbau ausgebildet sind.

Es ist bekannt, dass viele Tiere deutlich sensibler auf eine Vielzahl von zivilisatorisch bedingten Strahlen und Wellen reagieren als Menschen. Insbesondere Hunde meiden Orte, an denen starke elektromagnetische Feldstärken gemessen werden. Diese Orte beschränken sich nicht auf die unmittelbare Nähe von Hochspannungsleitungen und Umspannwerken. Die fortschreitende Technisierung führt vielmehr dazu, dass die Belastung durch verschiedenste elektrische und magnetische Gleich- und Wechselfelder ständig zunimmt. Insbesondere sind hat sich das Aufkommen von hochfrequenten Funkwellen im Zusammenhang mit dem Ausbau der Mobilfunknetze im 21. Jahrhundert massiv erhöht. Die bekannten Tiermöbel und die konventionellen Hundehütten schützen die Tiere zwar vor Wind und Wetter, vor Kälte, Hitze, Licht und Sonnenstrahlen, nicht aber vor Elektrosmog und -strahlung.

Es besteht zudem die Vermutung, dass elektromagnetische Felder negative Auswirkungen auf die Gesundheit von Tieren haben können. Diese Vermutung ist weder unbegründet noch wissenschaftlich widerlegt worden. In der Radiästhesie wird die Existenz weiterer Strahlungsarten postuliert, die von Tieren und insbesondere von Hunden wahrgenommen werden und ebenfalls deren Gesundheit beeinflussen können.

Zwar sind aus dem Dokument DE 94 08 490 U1 Strahlenschutzauflagen bekannt, die geeignet sind, elektromagnetische Felder abzuschirmen. Diese Strahlenschutzauflagen bestehen aus einem Basisaufnahmeträger aus textilem Gewebe, auf dem eine Schicht aus metallischem Material aufgebracht ist. Diese Metallschicht wirkt abschirmend gegen Elektrosmog. So eine Schicht aus metallischem Material ist beispielsweise in der DE 37 12 192 A1 beschrieben. Nachteilhafterweise sind diese Strahlenschutzauflagen flächig ausgestaltet und damit insbesondere für die Abschirmung in verschiedenen Richtungen nicht geeignet. Zum Beispiel am Arbeitsplatz in einem Büro liegt der Hund praktisch immer in der Nähe eines Computers oder von elektrischen Leitungen. Hier ist ein Schutz lediglich von unten nicht ausreichend. Außerdem sind diese Auflagen steif ausgebildet und können nicht zu einem Tiermöbel geformt werden.

Die der Erfindung zugrunde liegende Aufgabe ist es, ein verbessertes Tiermöbel bereitzustellen, dessen Innenraum gegen elektromagnetische Strahlung abgeschirmt ist.

Diese Aufgabe wird durch die Merkmale von Anspruch 1 gelöst. Vorteilhafte Ausführungsformen bilden den Gegenstand der jeweiligen Unteransprüche.

Das erfindungsgemäße Tiermöbel für den Aufenthalt von Tieren hat eine Wandung, die einen Innenraum umschließt. In der Wandung ist eine Öffnung ausgebildet, durch die der Hund in den Innenraum gelangt. Die Wandung umfasst ein metallisches Material, um von außen auf das Tiermöbel auftreffende, elektromagnetische Strahlung abzuschirmen.

Ein Tier, das die Orte starker elektromagnetischer Strahlung meidet, wird sich deshalb vermehrt in dem derart abgeschirmten, Tiermöbel aufhalten, um sich dort vor Einflüssen durch Elektrosmog zu schützen. Vorteilhafterweise kann das metallische Material in der vollständig umschließenden Wandung einen Rundumschutz bieten. Außerdem bietet das Vorsehen des metallischen Materials an der Wandung eine große gestalterische Freiheit. Um von außen auf das Tiermöbel auftreffende elektromagnetische Strahlung wirkungsvoll abzuschirmen, wird die Dicke der metallischen Schicht oder der Metallanteil am Material der Wandung derart gewählt, dass es zu einer abschirmenden Wirkung kommt, d.h. dass das elektrische oder magnetische Feld im Innenraum kleiner ist verglichen zur Umgebung. Metalle umfassen stromleitende Materialien, wie Eisen oder Kupfer. Mit dem vorgeschlagenen Tiermöbel lassen sich so für Tiere störende Umwelteinflüsse, elektromagnetische Felder, Geräusche, Gerüche und Licht reduzieren. Durch das Abschirmen können im Inneren des Tiermöbels im Vergleich zur Umgebung reduzierte elektrische, magnetische und/oder elektromagnetische Felder realisiert werden. Dabei soll insbesondere die Stärke (Amplitude) reduziert sein.

Es ist vorteilhaft, wenn die Wandung bis auf die Öffnung vollständig geschlossen ausgebildet ist, so dass das Prinzip eines Faraday'schen Käfigs verwirklicht wird. Grundsätzlich sollen im Vergleich zur Umgebung zumindest in der Amplitude reduzierte elektrische, magnetische und elektromagnetische Felder realisiert werden. Vollständig bedeutet ringsherum geschlossen, wobei die Öffnung für den Zutritt so klein gewählt ist, dass das Haustier gerade hineinschlüpfen kann. Für einen mittelgroßen Hund wäre diese Öffnung 20 cm auf 30 cm. Weiterhin kann die Wandung ein Kunststoffmaterial umfassen. Das metallische Material kann in das Kunststoffmaterial eingebettet oder auf das Kunststoffmaterial aufkaschiert sein. Kunststoffmaterialien bieten eine Vielzahl von Konstruktions- und Gestaltungsmöglichkeiten. Außerdem bieten Kunststoffmaterialien Vorteile bezüglich der Beständigkeit gegenüber Umwelteinflüssen und Alterung. Als Kunststoffe kommen unter anderem elastische thermoplastische Materialien oder Kunststoffgewebe in Betracht. Beispielsweise sind Silikon, Recycling oder Gummi als Kunststoffmaterial verwendbar. Es können auch halbdurchsichtige Kunststoffgewebe (z.B. Gaze) verwendet werden.

Gemäß eines vorteilhaften Aspekts der vorliegenden Erfindung ist deshalb vorgesehen, dass das metallische Material als Metallgewebe oder in Form von Metallspänen ausgebildet und vollständig in das Kunststoffmaterial eingebettet ist. In Form von Gewebe oder Spänen lässt sich das metallische Material einfach und stabil mit Kunststoffmaterial ummanteln und in dieses einbetten, wobei die Abschirmfunktion bestehen bleibt.

Gemäß eines anderen, vorteilhaften Aspekts der Erfindung ist das metallische Material als Textilgewebe mit metallischen Fäden ausgestaltet. Das Textilgewebe wird dann auf das Kunststoffmaterial aufkaschiert, welches die Wandung bildet. Derartige Textilgewebe sind besonders leicht zu verarbeiten und geben den metallischen Fäden eine Käfigstruktur, so dass die Abschirmwirkung besonders einfach erzielt werden kann. Bei dieser Ausführungsform kann das Kunststoffmaterial von innen, von außen oder beiderseits auf das Textilgewebe aufkaschiert werden, so dass sich vielfältige Gestaltungsmöglichkeiten ergeben.

Bevorzugt umfasst die Wandung ferner ein natürliches Material, das in das Kunststoffmaterial eingebettet ist. Erfindungsgemäße natürliche Materialien sind solche Materialien, die mit einfachen Mitteln direkt aus der Natur gewonnen und ohne den Einsatz von industriellen Verarbeitungsmethoden oder chemischen oder anderen künstlichen Behandlungen hergestellt werden können. Durch den Einsatz von natürlichem Material wird das Tiermöbel zum Einen weniger künstlich und damit tiergerechter. Zum Anderen ist das natürliche Material durch die Einbettung vor Abnutzung und vor Alterungserscheinungen, wie zum Beispiel vor Verrottung oder Verwesung, geschützt.

Besonders vorteilhaft ist die Verwendung von Stroh, das zerkleinert (gemahlen oder gehäckselt) in das Kunststoffmaterial eingebettet ist. Die erfindungsgemäße Zerkleinerung des natürlichen Materials kann dabei im Gegensatz zu seiner Gewinnung sehr wohl den Einsatz der oben genannten, industriellen Verarbeitungsmethoden oder chemischen oder anderen künstlichen Behandlungen beinhalten. Das Stroh bietet nicht nur optische Vorzüge, sondern hat überdies eine wärmeisolierende Funktion.

Eine weitere Ausführungsform der Erfindung sieht vor, dass das Kunststoffmaterial zumindest bereichsweise transparent ausgebildet ist. Dies hat insbesondere ästhetische Vorteile, indem der Eindruck eines "Naturprodukts" erzeugt wird. Ob das Kunststoffmaterial ganz oder teilweise transparent ausgebildet ist, zu welchem Grad das Kunststoffmaterial durchsichtig oder matt sein soll oder an welchen Stellen des Tiermöbels das Kunststoffmaterial transparent sein soll und an welchen nicht, ist allein vom gestalterischen Willen abhängig.

Bevorzugter Weise ist das Kunststoffmaterial für das Tiermöbel elastisch. Die dann ebenfalls elastische Wandung ist dadurch weniger anfällig gegenüber Sprödbruch in Folge von mechanischen Belastungen im Gebrauch oder beim Transport. Zudem wird der Komfort für das Tier erhöht. Als elastisches Kunststoffmaterial kommen insbesondere Polyamide oder flexibles Gummi in Betracht. Polyamide stehen in vielfältigen Konfigurationen zur Verfügung. Dies ermöglicht eine große Gestaltungsfreiheit hinsichtlich der Farbgebung oder Transparenz des Kunststoffmaterials und auch hinsichtlich der Härte oder Elastizität der Wandung.

Gemäß einem besonders vorteilhaften Aspekt der Erfindung besteht die Wandung aus mehreren Schichten, wobei eine erste Schicht das metallische Material umfasst. Eine zweite Schicht umfasst das natürliche Material. Somit ist einerseits die Herstellung vereinfacht, da verschiedene Materialien für verschiedene Schichten separat hergestellt oder zugekauft und dann zusammengefügt werden können. Weiterhin kann das natürliche Material, aus optischen Gründen oder um ein tiergerechteres Tiermöbel zu schaffen, der äußersten, in der innersten oder in beiden Schichten enthalten sein. Die Bezeichnung als erste oder zweite Schicht ist indes unabhängig davon, ob sich eine Schicht mit metallischem oder das natürlichem Material innen, außen, oder eingebettet inmitten der Wandung befindet.

Bevorzugt ist das natürliche Material, das von der genannten zweiten Schicht umfasst ist, in ein transparentes Kunststoffmaterial eingebettet. Wenn die zweite Schicht zugleich die innerste oder äußerste Schicht der Wandung ist, wird zudem das natürliche Material sichtbar und kann seine optischen Vorzüge entfalten.

Ferner bevorzugt ist die Öffnung mit einem Verschlusselement abgedeckt. Das Verschlusselement besteht aus dem gleichen Material wie die Wandung des erfindungsgemäßen Tiermöbels. Der Innenraum kann so allseitig gegen elektromagnetische Strahlung abgeschirmt werden. Zum Abdecken der Öffnung eignet sich insbesondere eine Klappe, eine Tür oder ein anderes Abdeckelement. Aus dem gleichen Material bedeutet, dass die hierin beschriebenen Materialen auch kombiniert werden können. Das Verschlusselement kann zum Beispiel ein Kunststoffgewebe oder ein Metallgewebe oder Mischungen davon umfassen.

Entsprechend einem Erfindungsaspekt umfasst die Wandung einen Bodenbereich, der ein nicht magnetisches Material umfasst. Durch die nicht magnetische Ausgestaltung wird verhindert, dass der Bodenbereich selbst ein Magnetfeld ausbildet. Der Bodenbereich dient als zusätzliche Abschirmung nach unten. Die Wandung des Tiermöbels kann auf dem Bodenbereich aufgestellt oder auf andere Art und Weise mit diesem verbunden sein.

Gemäß einem weiteren Aspekt umfasst die Wandung ein thermisch isolierendes Material. Das thermisch isolierende Material schafft ein wohlig temperiertes Klima schon aufgrund der Eigenwärme des Tieres. Das thermisch isolierende Material kann zum Beispiel ein Kunststoffschaum sein. Das thermisch isolierende Material kann zum Beispiel auch ein (in einem Textil gebundenes) Stroh sein.

Im Folgenden wird die Erfindung anhand von Zeichnungen näher erläutert. Gleiche Bezugszeichen beschreiben gleiche Merkmale in allen Zeichnungen. Es zeigen:
- Fig. 1: perspektivische Ansicht auf das Tiermöbel;
- Fig. 2a: schematische Schnittansicht einer Schicht einer möglichen Ausführungsform der Wandung;
- Fig. 2b: schematische Schnittansicht einer Schicht einer möglichen Ausführungsform der Wandung;
- Fig. 3a: schematische Schnittansicht einer möglichen Ausführungsform der Wandung;
- Fig. 3b: schematische Schnittansicht einer möglichen Ausführungsform der Wandung;
- Fig. 4a: schematische Schnittansicht einer möglichen Ausführungsform der Wandung;
- Fig. 4b: schematische Schnittansicht einer möglichen Ausführungsform der Wandung;
- Fig. 5: perspektivische Ansicht eines Tiermöbels in Schneckenform; und
- Fig. 6: horizontale Schnittansicht des Tiermöbels aus Fig. 5.

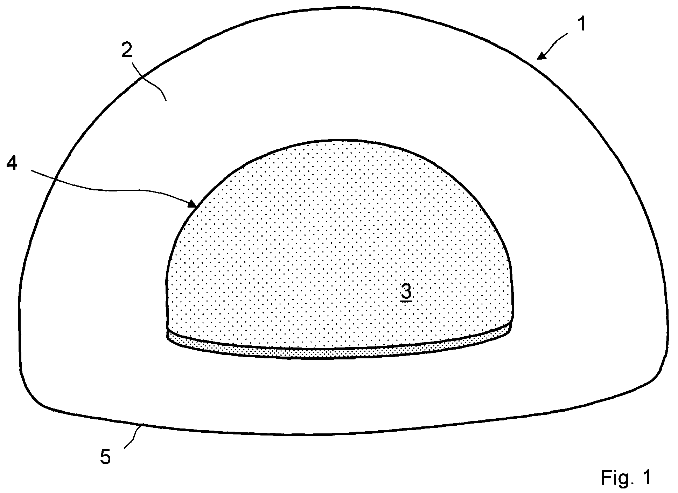

In **Fig. 1** ist das erfindungsgemäße Tiermöbel1 für den Aufenthalt von Hunden zu sehen. Eine Wandung 2 des Tiermöbels 1 umschließt einen Innenraum 3, der geeignet ist, einen Hund aufzunehmen. In der Wandung ist eine Öffnung 4 ausgebildet, durch die ein Hund in den Innenraum 3 gelangen kann. Die Wandung 2 umfasst ein metallisches Material, das den Innenraum 3 gegen von außen auf das Tiermöbel 1 auftreffende, elektromagnetische Strahlung abschirmt. Ferner zeigt Fig. 1 einen Bodenbereich 5, der ein nicht magnetisches Material umfasst.

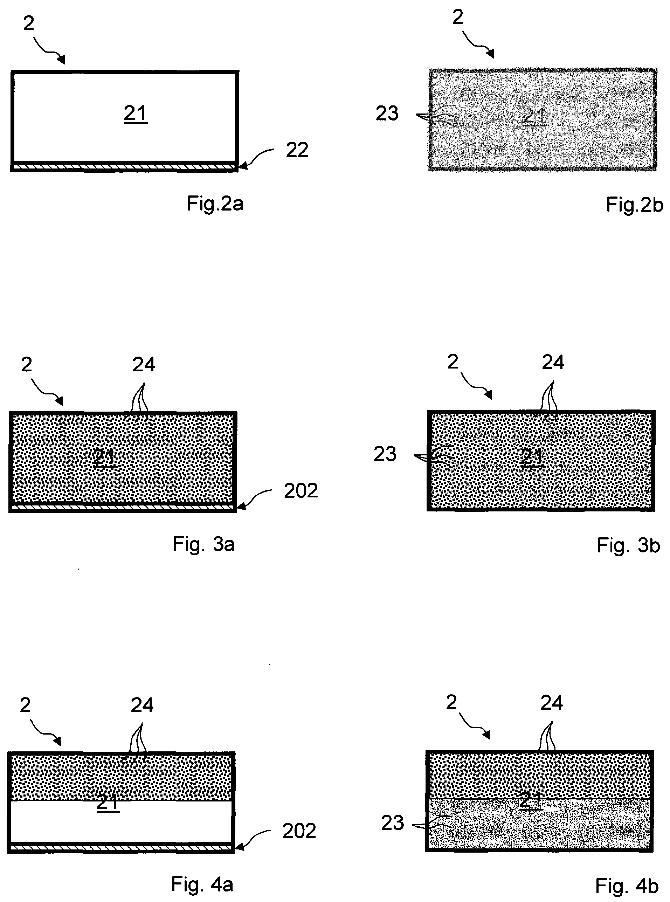

**Fig. 2a** zeigt eine mögliche Ausgestaltung eines Teils der Wandung 2 in der Schnittansicht. Zu sehen ist ein Textilgewebe mit metallischen Fäden 22. Die Fäden ziehen sich parallel, in einer verknüpften oder gekreuzten Gitterform oder auf andere Weise durch die gesamte Wandung 2 und bilden so einen Faraday'schen Käfig, so dass elektromagnetische Strahlung abgeschirmt wird. Das Kunststoffmaterial 21 ist einseitig auf das Textilgewebe mit den metallischen Fäden 22 aufkaschiert. Das Kunststoffmaterial 21 ist beispielhaft ein elastisches Polyamid.

**Fig. 2b** zeigt eine andere mögliche, erfindungsgemäße Ausgestaltung eines Teils der Wandung 2 in der Schnittansicht. Ein metallisches Material 23 ist in Form von Metallspänen in ein Kunststoffmaterial 21 eingebettet. Das metallische Material 23 kann beispielsweise auch in Form eines Metallgewebes in das Kunststoffmaterial 21 eingebettet sein. Diese Ausführung des metallischen Materials 23 ist gewichtssparend und leicht herstellbar.

**Fig. 3a** zeigt eine weitere mögliche Ausgestaltung eines Teils der Wandung 2 in der Schnittansicht. Zu sehen ist zum Einen ein Textilgewebe mit metallischen Fäden 22, auf welches das Kunststoffmaterial 21 aufkaschiert ist. Zum Anderen ist ein natürliches Material 24 in Form von Stroh dargestellt. Das Stroh 24 ist gemahlen und in das Kunststoffmaterial 21 eingebettet. Ebenso könnte das Stroh 24 gehäckselt oder auf andere Weise zerkleinert sein. Durch die Verwendung von Stroh 24 ist das Innere 3 des Tiermöbels 1 auch thermisch isoliert.

**Fig. 3b** zeigt noch eine weitere mögliche, erfindungsgemäße Ausgestaltung eines Teils der Wandung 2 in der Schnittansicht. Ein metallisches Material 23 in einer erfindungsgemäßen Form ist in ein Kunststoffmaterial 21 eingebettet. Außerdem eingebettet in das Kunststoffmaterial 21 ist ein natürliches Material 24. Das metallische und das natürliche Material 23, 24 sind in diesem Beispiel zerkleinert und miteinander vermengt.

**Fig. 4a** zeigt eine erfindungsgemäße Ausgestaltung einer ein metallisches Material 22 umfassenden, ersten Schicht und einer ein natürliches Material 24 umfassenden, zweiten Schicht der Wandung 2. Zwischen der ersten und der zweiten Schicht befindet sich eine zusätzliche Schicht aus einem Kunststoffmaterial 21, wobei diese zusätzliche Schicht auf die erste Schicht aufkaschiert ist. Die erste Schicht ist ein Textilgewebe mit metallischen Fäden 22. Die zweite Schicht ist außen auf die zusätzliche Schicht aufkaschiert und umfasst ein natürliches Material 24, welches in ein Kunststoffmaterial 21 eingebettet ist. Das Kunststoffmaterial 21 ist transparent. Deshalb ist das darin eingebettete, natürliche Material 24 von außen sichtbar.

**Fig. 4b** zeigt eine weitere, erfindungsgemäße Ausgestaltung einer ein metallisches Material 23 umfassenden, ersten Schicht und einer ein natürliches Material 24 umfassenden, zweiten Schicht der Wandung 2. Die erste Schicht besteht aus einem Kunststoffmaterial 21, in welches ein metallisches Material 23 in Form von Metallspänen eingebettet ist. Die zweite Schicht ist außen auf die zusätzliche Schicht aufkaschiert und umfasst ein natürliches Material 24, welches in ein Kunststoffmaterial 21 eingebettet ist. Das Kunststoffmaterial 21 ist transparent. Deshalb ist das darin eingebettete, natürliche Material 24 von außen sichtbar.

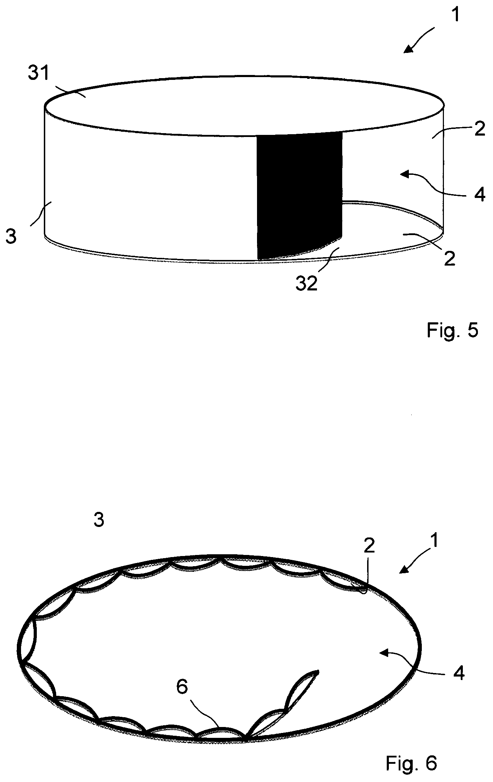

**Fig. 5** zeigt eine zweite Ausführungsform (die ohne weiteres mit der ersten Ausführungsform kombinierbar ist) des erfindungsgemäßen Tiermöbels 1, das ebenfalls für den Aufenthalt von Hunden ist. Dabei ist die Wandung 2 schneckenförmig ausgebildet. Die Schneckenform ermöglicht eine elegantes Aussehen und eine einfache Herstellung. Die Wandung umschließt zusammen mit einem Deckelteil 31 und einem Bodenteil 32 (mit unterhalb angeordneten Auflagestücken) den Innenraum 3, der geeignet ist, einen Hund aufzunehmen. Durch die Anordnung und Form der Wandung 3 ist eine Öffnung 4 ausgebildet, durch die ein Hund in den Innenraum 3 gelangen kann. Die Größe des Innenraums ist zwischen 20 cm und 70cm im Durchmesser. Die Öffnung 4 hat eine Breite im Bereich von 20 cm bis 30 cm. Die Höhe der Wandung 3 liegt im Bereich 25 cm bis 50 cm. Die Wandung 3 umfasst ein metallisches Material, das den Innenraum 3 gegen von außen auf das Tiermöbel 1 auftreffende, elektromagnetische Strahlung abschirmt. Dazu kann die Wandung 3 mit Deckelteil 31 und Bodenteil 32 aus dem abschirmenden Material 2 bestehen oder damit kaschiert sein. Das abschirmende Material 2 umschießt den Innenraum vollständig bis auf die Öffnung 4. Dazu kann das kaschierende Material 2 einstückig ausgebildet sein oder die Einzelteile stehen miteinander elektrisch in Kontakt. Die schneckenförmige Wandung 3 kann an der Außenseite horizontale Hölzer (Stärke 0,7 cm) umfassen und an der Innenseite mit einem zusätzlichen (abgesteppten) Polsterelement (sieh Fig. 6) ausgestaltet sein. Zum Transport kann die Öffnung mit einem Deckel (nicht gezeigt) verschlossen werden und einen Griff aufweisen. Zum Transport ist ebenso vorgesehen leichte Materialien zu verwenden oder das Tiermöbel zumindest teilweise zerlegbar auszugestalten.

**Fig. 6** zeigt die horizontale Schnittansicht des Tiermöbels 1 aus Fig. 5, wobei die Wandung 3 an der Innenseite mit dem abschirmenden Material 2 kaschiert ist und das mit einem (einlegbaren) Polsterelement 6 ausgelegt ist.

## Patentansprüche

1. Tiermöbel (1) für den Aufenthalt von Tieren, mit einer Wandung (2), die einen Innenraum (3) zur Aufnahme eines Tieres umschließt, wobei in der Wandung (2) eine Öffnung (4) ausgebildet ist, durch die das Tier in den Innenraum (3) gelangt, wobei die Wandung (2) ein metallisches Material (22, 23) umfasst, um von außen auf das Tiermöbel (1) auftreffende elektromagnetische Strahlung abzuschirmen.

2. Tiermöbel (1) nach Anspruch 1, wobei die Wandung (2) bis auf die Öffnung (4) vollständig geschlossen ausgebildet ist, und wobei die Wandung (2) ferner ein Kunststoffmaterial (21) umfasst, in welches Kunststoffmaterial (21) das metallische Material (23) eingebettet ist oder auf welches Kunststoffmaterial (21) das metallische Material (23) aufkaschiert ist.

3. Tiermöbel (1) nach Anspruch 2, wobei das metallische Material als Metallgewebe oder Metallspäne (23) ausgebildet ist und vollständig in das Kunststoffmaterial (21) eingebettet ist.

4. Tiermöbel (1) nach Anspruch 2, wobei das metallische Material ein Textilgewebe mit metallischen Fäden (22) ist, welches Textilgewebe (22) auf das die Wandung (2) bildende Kunststoffmaterial (21) aufkaschiert ist.

5. Tiermöbel (1) nach einem der vorangehenden Ansprüche, wobei die Wandung (2) ferner ein natürliches Material (24) umfasst, und wobei das natürliche Material (24) in das Kunststoffmaterial (21) eingebettet ist.

6. Tiermöbel (1) nach Anspruch 5, wobei das natürliche Material (24) Holz oder Stroh ist, das zerkleinert in das Kunststoffmaterial (21) eingebettet ist.

7. Tiermöbel (1) nach einem der vorangehenden Ansprüche, wobei das Kunststoffmaterial (21) zumindest bereichsweise transparent ausgebildet ist.

8. Tiermöbel (1) nach einem der vorangehenden Ansprüche, wobei das Kunststoffmaterial (21) ein elastisches Material ist.

9. Tiermöbel (1) nach einem der vorangehenden Ansprüche, wobei die Wandung (2) aus mehreren Schichten besteht, und wobei eine erste Schicht das metallische Material (22, 23) umfasst, und wobei eine zweite Schicht das natürliche Material (24) umfasst.

10. Tiermöbel (1) nach Anspruch 9, wobei in der zweiten Schicht das natürliche Material (24) in ein transparentes Kunststoffmaterial (21) eingebettet ist.

11. Tiermöbel (1) nach einem der vorangehenden Ansprüche, wobei die Öffnung (4) mit einem Verschlusselement abgedeckt ist, welches Verschlusselement aus dem gleichen Material wie die Wandung (2) ist.

12. Tiermöbel (1) nach einem der vorangehenden Ansprüche, wobei die Wandung (2) einen Bodenbereich (5) umfasst, der ein nicht magnetisches Material umfasst.

13. Tiermöbel (1) nach einem der vorangehenden Ansprüche, wobei die Wandung (2) ein thermisch isolierendes Material umfasst.
